# EUROPÄISCHE PATENTANMELDUNG

(11) **EP 1 077 024 A1**
(43) Veröffentlichungstag der Anmeldung: **21.02.2001**
(21) Anmeldenummer: 99116143.1
(22) Anmeldetag: 19.08.1999
(51) Int. Cl.: A01F 15/07

(54) **Landwirtschaftliche Funktionseinheit**

(71) Anmelder: Kverneland Gottmadingen GmbH & Co. KG, 78244 Gottmadingen (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

In einer landwirtschaftlichen Funktionseinheit (F), bestehend aus einer Ballenpresse (P), die mit ihrem Rahmen (C) auf einem Fahrwerk (A) angeordnet ist, und mit einem Wickler (W), der in vorbestimmter Zuordnung zur Ballenpresse (P) an deren Ballenauswurfseite vom selben Fahrwerk (A) getragen wird, ist der Wickler (W) als von der Ballenpresse (P) abkoppelbarer Huckepack-Wickler ausgebildet.

## Beschreibung

Die Erfindung betrifft eine landwirtschaftliche Funktionseinheit gemäß Oberbegriff des Patentanspruchs 1.

Ballenpressen, insbesondere Rundballenpressen, sind seit Jahrzehnten in der Landwirtschaft im Einsatz, um aus auf dem Feld liegendem Erntegut gepreßte Rundballen zu formen. In der Haupterntezeit, z.B. zwischen Juli und August, werden die fertigen Rundballen üblicherweise nur in Bindematerial gehüllt. Vor oder danach, und auch abhängig von der Sorte des Ernteguts, ist es zweckmäßig, die gebundenen Ballen in Folienmaterial einzuwickeln, beispielsweise auch um in dem Folienmaterial einen Silierprozeß ablaufen zu lassen, oder um Strohmaterial gegen Witterungseinflüsse zu schützen. Zu diesem Zweck sind ebenfalls seit langem Wickler im Einsatz.

In der Praxis gibt es mehrere Möglichkeiten, um Ballenpressen mit Wicklern zusammenarbeiten zu lassen.

In einer aus der Praxis bekannten Funktionseinheit ist die Ballenpresse auf einem gemeinsamen Fahrgestell in Fahrtrichtung vor dem Wickler angeordnet. Der Wickler ist in fester Zuordnung zur Ballenauswurfseite hinter der Heckklappe der Ballenpresse installiert. Die fest installierte Übergabeeinrichtung befördert jeden fertig gewickelten und eingebundenen Ballen in den Wickler. Die Manövrierfähigkeit der Funktionseinheit, die von einem Schlepper gezogen und vom Schlepper aus gesteuert wird, ist zufriedenstellend, die Übergabe der Ballen funktioniert problemlos. Da der Wickler jedoch fester Bestandteil der Funktionseinheit ist, muß er auch dann mit aufs Feld genommen werden, wenn keine Ballen in Folienmaterial einzuwickeln sind (unnötiger Ballast von ca. 1,5 t). Da die Lebensdauer der Ballenpresse erfahrungsgemäß ungefähr die halbe Lebensdauer des Wicklers beträgt, ist der Wickler ab Ausfall der Ballenpresse nicht mehr einsetzbar.

Als Vorstufe dieser Funktionseinheit gibt es in der Praxis die Ballenpresse und den Wickler als getrennt schleppbare Einheiten, jeweils mit einem eigenen Fahrgestell und einer eigenen Zugdeichsel. Die Ballenpresse wird vom Schlepper über das Feld gezogen und preßt und bindet die Ballen und läßt diese liegen. Der Wickler wird nachfolgend mit demselben oder mit einem anderen Schlepper zu den Ballen gebracht und verarbeitet diese. Die Handhabung ist mühsam; in vielen Fällen sind zwei Schlepper einzusetzen.

In Weiterentwicklung dieses Konzepts werden in der Praxis die Ballenpresse und der Wickler im Tandem von einem Schlepper gezogen, wobei der Wickler an die Presse angekuppelt ist. Die Ballenpresse und der Wickler arbeiten getrennt und haben eigene Fahrwerke. Zum Transport des Wicklers auf das Feld kann der Schlepper der Ballenpresse benutzt werden.

Die nächste Entwicklungsstufe besteht in der Praxis darin, daß der Wickler nach wie vor ein eigenes Fahrwerk besitzt und in einem Gespann an die Ballenpresse angekuppelt wird, um auf das Feld gebracht zu werden. Die Ballenpresse und der Wickler arbeiten gemeinsam, d.h. nach Anhalten der Ballenpresse übernimmt der Wickler den fertigen Ballen und wickelt diesen. In beiden vorgenannten Fällen ist das Manövrieren schwierig, insbesondere bei Rückwärtsfahrt. Im letztgenannten Fall ist die Übergabe des Ballens an den Wickler in schwierigem Gelände oder bei geknickter Relativposition zwischen der Ballenpresse und dem Wickler (in einer Kurve oder am Hang) schwierig oder gegebenenfalls nicht möglich.

In einer weiteren Entwicklungsstufe wird in der Praxis das Fahrwerk des von der Ballenpresse geschleppten Wicklers lenkbar ausgebildet und ein Deichselwinkelsensor vorgesehen. Diese Maßnahmen verbessern die Manövrierbarkeit und auch die Übergabe der Ballen. Allerdings sind die Transportfahrgeschwindigkeit des Gespanns beschränkt und der technische Aufwand unzweckmäßig hoch.

Der Erfindung liegt die Aufgabe zugrunde, eine Funktionseinheit der eingangs genannten Art zu schaffen, bei der die Vorteile der starren und der trennbaren Konzepte nutzbar, hingegen die Nachteile der starren und trennbaren Konzepte vermeidbar sind. Im Rahmen dieser Aufgabenstellung wird eine baulich einfache und kompakte, betriebssichere und für den Endverbraucher kostengünstige Funktionseinheit angestrebt, mit der gute Manövrierbarkeit und hohe Transportgeschwindigkeiten möglich sind.

Die gestellte Aufgabe wird mit den Merkmalen des Anspruchs 1 gelöst.

Da der Wickler als Huckepack-Wickler ausgebildet und in der erforderlichen Zuordnung zur Ballenpresse von der Ballenpresse getragen wird, sind die Manövrierbarkeit der Funktionseinheit und die Übergabequalität gut. Wenn der Landwirt die Ballen nicht in Folienmaterial einzuwickeln braucht, läßt sich der Huckepack-Wickler abnehmen. Dann arbeitet die Ballenpresse wie eine herkömmliche Ballenpresse, d.h. rasch und universell. Das Gewicht des Huckepack-Wicklers braucht nicht mitgenommen zu werden. Der Huckepack-Wickler kann auf dem Feld abgesetzt werden, wenn die Arbeitsbedingungen dies erfordern, oder der Wickler für einen Einsatz unabhängig von der Ballenpresse benötigt wird. Ist die Ballenpresse nicht mehr verwendbar, dann kann der Wickler dennoch weiter verwendet, z.B. auf eine neue oder andere Ballenpresse aufgesattelt werden. Die Funktionseinheit mit dem Huckepack-Wickler nutzt so die Vorteile der verschiedenen bekannten Konzepte und vermeidet deren Nachteile.

Ist der Huckepack-Wickler mit Schnellverschlüssen an der Ballenpresse abnehmbar angebracht, dann läßt er sich einfach und rasch aufsatteln oder abstellen.

Ist der Huckepack-Wickler mittels eines Zusatzrahmens an der Ballenpresse angebracht, dann ist die feste Zuordnung zwischen den beiden Geräten herstellerseitig vorgebbar, was im Hinblick auf eine hohe Übergabequalität zweckmäßig ist. Der Zusatzrahmen kann ferner zum Anbringen weiterer Hilfskomponenten genutzt werden.

Eine Ausführungsform der Erfindung mit eigenständiger erfinderischer Bedeutung sieht vor, die Übergabeeinrichtung, die in der Funktionseinheit aus Ballenpresse und aufgesatteltem Huckepack-Wickler vorgesehen ist, in einen wicklerseitigen und einen ballenpressenseitigen Teil zu unterteilen, wobei der wicklerseitige Teil zusammen mit dem Wickler von der Ballenpresse abnehmbar ist. Ist der Huckepack-Wickler abgenommen, dann fungiert der ballenpressenseitige Teil als normaler Auswerfer der Ballenpresse. Ist hingegen der Huckepack-Wickler aufgesattelt, dann arbeitet der ballenpressenseitige Teil mit dem wicklerseitigen Teil zusammen, um den Ballen in den Wickler zu überführen. Mit der Aufteilung der Übergabeeinrichtung läßt sich jedoch in gewinnbringender Weise auch die Leistungsfähigkeit der Funktionseinheit steigern, weil sich die Zeitdauer verkürzen läßt, über die die Funktionseinheit bei der Übergabe anzuhalten hat. Bisher läßt sich die Heckklappe erst nach vollständig vollzogener Übergabe und in die Ausgangsposition verbrachter Übergabeeinrichtung schließen, um mit der Funktionseinheit wieder weiterfahren und Erntegut aufnehmen und verarbeiten zu können. Dank der unterteilten Übergabeeinrichtung kann die Heckklappe schon geschlossen werden, während der wicklerseitige Teil der Übergabeeinrichtung den Ballen noch in den Wickler einbringt und der ballenpressenseitige Teil der Übergabeeinrichtung schon in seiner Ausgangsposition ist. Wenn so pro Übergabezyklus wenigstens einige Sekunden Zeit eingespart werden, addiert sich dies auf dem Feld zu einem bedeutsamen Zeitgewinn, d.h. zu einer höheren Rate verarbeiteter Ballen. Dies resultiert aus der Maßnahme, die Übergabeeinrichtung nicht wie bei herkömmlichen Konzepten in einem einzigen Hub zu betätigen und dann wieder langsam in die Ausgangsposition zurückzustellen, sondern jeden Teil der Übergabeeinrichtung nur für einen Teil der Transportbewegung des Ballens zu nutzen und den ballenpressenseitigen Teil schneller in die Ausgangsposition zurückzustellen, um die Heckklappe früher zu schließen. Der wicklerseitige Teil wird erst nach dem Schließen der Heckklappe zurückgestellt. Die Funktionseinheit kann jedoch nach Schließen der Heckklappe wieder losfahren und einen neuen Ballen formen.

Um der aufgrund des aufgesattelten Huckepack-Wicklers geänderten Gewichtsverteilung in der Funktionseinheit Rechnung zu tragen, sollte bei einem Fahrwerk mit einer Radachse die Radachse unten in etwa hinter der Schwenkachse der Heckklappe positioniert sein.

Ist hingegen wegen des erhöhten Gesamtgewichtes bei aufgesatteltem Huckepack-Wickler ein Tandemfahrwerk mit zwei Radachsen und einer Tandemachse vorgesehen, so sollte die Tandemachse unten und in Fahrtrichtung in etwa hinter der Schwenkachse der Heckklappe positioniert sein, zweckmäßigerweise in etwa unter dem Gesamtschwerpunkt der Funktionseinheit.

Grundsätzlich kann es vorteilhaft sein, die Radachse bzw. Tandemachse am Chassis der Ballenpresse umsetzbar anzubringen, z.B. zwischen zwei Positionen unter Abstimmung auf die jeweilige Schwerpunktlage.

Das frühzeitige Schließen der Heckklappe bei noch arbeitendem wicklerseitigem Teil der Übergabeeinrichtung ist möglich, wenn die beiden Teile der Übergabeeinrichtung vor bzw. hinter der Tandem- bzw. der Radachse angeordnet sind.

Ein weiterer Aspekt der erfindungsgemäßen Lösung mit eigenständiger erfinderischer Bedeutung besteht darin, daß an dem Zusatzrahmen der Ballenpresse wenigstens ein Wickelfolien-Staukasten angeordnet ist. In diesem Staukasten kann genügend Folienmaterial mitgeführt werden, um praktisch rund um die Uhr wickeln zu können. In ihrer Position am Zusatzrahmen stören die Staukästen die Funktion der Ballenpresse und des Wicklers nicht. Jeder Staukasten ist ausschwenkbar angeordnet, wobei er im ausgeschwenkten Zustand entweder die Entnahme einer Folienrolle ermöglicht, oder den seitlichen Zugang zu Wartungzwecken freigibt. Dabei ist es günstig, wenn der Staukasten und der Verschlußdeckel um zwei getrennte, annähernd vertikale Achsen schwenkbar sind. Die Verstellung des Staukastens und das Öffnen des Verschlußdeckels erfordern dann nur geringen Kraftaufwand.

Eine bequeme Handhabung ergibt sich, wenn sowohl der Staukasten als auch der Verschlußdeckel durch einen gemeinsamen Verschluß gesichert sind. Wenn der Benutzer der Funktionseinheit den Verschluß öffnet oder abnimmt, läßt sich der Staukasten zu Wartungszwecken seitlich wegschwenken und/oder auch der Verschlußdekkel, um eine Folienrolle entnehmen oder den Staukasten füllen zu können.

Eine zuverlässige, für den fertigen Ballen schonende Übergabe, wird mit einem im wicklerseitigen Teil der Übergabeeinrichtung vorgesehenen, schwenkbaren Rahmen erzielt, dessen endseitiger Querholm ein freibewegliches Element trägt, das zwängende Kräfte am Ballen vermeidet. Zweckmäßigerweise ist dieses Element eine am Querholm drehbare Rolle oder Walze, die sich bei auftretenden Relativbewegungen am Ballen abwälzt und, z.B., das Bindematerial und die Ballenoberfläche, schonend beaufschlagt.

Ein weiterer Aspekt mit eigenständiger erfinderischer Bedeutung sieht vor, die Hydraulikverrohrung so einfach wie möglich und bequem handhabbar auszubilden. Üblicherweise erfolgt die Heckklappensteuerung vom Wickler her, wobei der Wickler über die Ballenpresse an die Hydraulikversorgung des Schleppers angeschlossen ist. Da jedoch der Huckepack-Wickler nur aufgesattelt wird, wenn er tatsächlich gebraucht ist, wäre bei abgenommenem Huckepack-Wickler die Heckklappenfunktion nicht mehr gegeben. Die flexiblen Strangendabschnitte der fest verlegten Hydraulikstränge lassen sich bei dem Huckepack-Konzept wahlweise entweder mit dazu passenden Kupplungen des aufgesattelten Wicklers verbinden, wobei dann zu den Kupplungen des Hydraulikantriebs der Heckklappe die üblichen Verbindungen vom Wickler zur Ballenpresse hergestellt werden. Bei abgenommenem Huckepack-Wickler können die flexiblen Endabschnitte der Stränge mit ihren Kupplungen an die Kupplungen des Hydraulikantriebs der Heckklappe direkt angeschlossen werden. Obwohl die Funktionseinheit aus Ballenpresse und Huckepack-Wickler eine einstückige Einheit ist, sind bewußt Hydraulikstränge unterteilt, derart, daß die flexiblen Strangendabschnitte zum Direktverbinden mit dem Hydraulikantrieb der Heckklappe nutzbar sind

Um Schäden vorzubauen und möglichst kurze Stillstandszeiten zu erzielen, ist es sehr wichtig, daß die Heckklappensteuerung (zumindest das Schließen) bei aufgebautem Huckepack-Wickler von diesem ausgeführt wird. Dabei ermöglicht der Wickler beispielsweise bei vom Schlepper angeordnetem Schließvorgang das Schließen der Heckklappe erst mit einem Freigabebefehl, sobald die Ballenübergabe soweit vollzogen ist, daß keine Kollisionsgefahr mehr besteht.

Zweckmäßigerweise sind an dem Huckepack-Wickler absenkbare Standfüße vorgesehen, um diesen jederzeit abstellen zu können. Es ist jedoch auch denkbar, den Huckepack-Wickler auf seinem Rahmen abzusetzen oder auf seiner hinteren Walze oder auf dem wicklerseitigen Teil der Übergabeeinrichtung. Um das Manipulieren des Huckepack-Wicklers zu vereinfachen, falls er nicht auf die Ballenpresse aufgesattelt ist, sollten alternativ oder additiv Aufnahmeelemente für einen Gabelstapler oder für ein Hebezeug vorgesehen sein, oder sogar Anschlüsse für eine Dreipunkthebe-Vorrichtung eines Schleppers.

Schließlich ist ein Anbausatz zweckmäßig, der an eine bereits im Betrieb gewesene oder eine Standard-Ballenpresse paßt, und es ermöglicht, durch Nachrüsten auch eine an sich nicht für die Huckepack-Funktion vorgesehene Ballenpresse mit dem Hukkepack-Wickler zu kombinieren.

Anhand der Zeichnung werden Ausführungsformen des Erfindungsgegenstandes erläutert. Es zeigen:
- Fig. 1: eine landwirtschaftliche Funktionseinheit aus einer Ballenpresse und einem Huckepack-Wickler, in einer Seitenansicht,
- Fig. 2: die Ballenpresse und den Wickler voneinander getrennt, in einer Seitenansicht,
- Fig. 3: eine Draufsicht zu Fig. 1,
- Fig. 4: die Funktionseinheit im Betrieb in einer bestimmten Betriebsphase und in Seitenansicht, und
- Fig. 5: die Funktionseinheit in einer anderen Betriebsphase, in Seitenansicht.

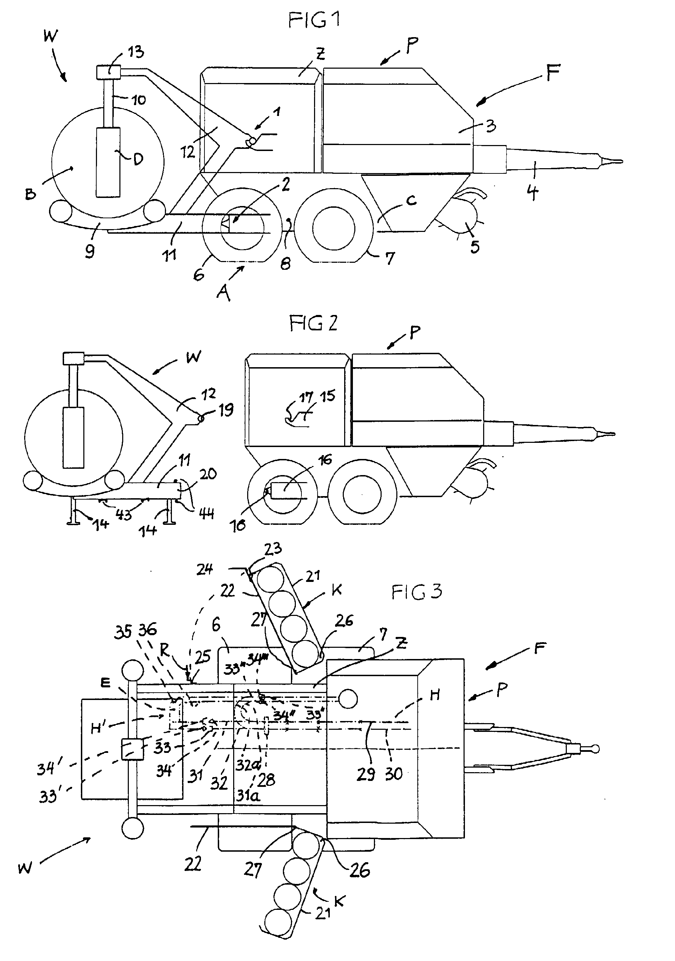

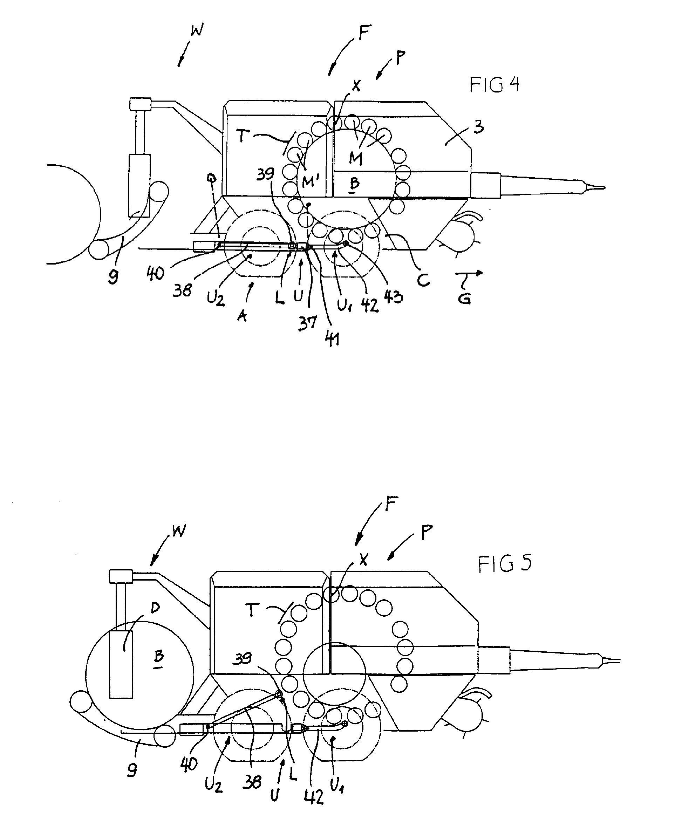

Eine landwirtschaftliche Funktionseinheit F in Fig. 1, die mit einem nicht gezeigten Schlepper ziehbar und von diesem mit Antriebsenergie versorgbar ist, besteht aus einer Ballenpresse P, hier einer Rundballenpresse, und einem Huckepack-Wickler W, der über Schnellverschlüsse 1, 2 abnehmbar an der Ballenpresse P gehaltert ist. Die Ballenpresse P fährt auf einem, z.B. nicht gelenkten, Fahrwerk A, in der gezeigten Ausführungsform einem Fahrwerk mit zwei in Fahrtrichtung beabstandeten Achsen (Laufräder 6, 7), die bei 8 (Tandem-Pendelachse) am Chassis C der Ballenpresse P abgestützt sind. Am Chassis C der Ballenpresse P ist ferner ein Gehäuse 3 angeordnet, das eine in den Fig. 1 und 2 nicht gezeigte, schwenkbare Heckklappe als eine Begrenzung einer innenliegenden Preßkammer enthält. Die Funktionseinheit F ist mit einer Deichsel 4 zu schleppen. Die Ballenpresse P besitzt eine Pick-up-Vorrichtung 5 und eine nicht gezeigte Bindevorrichtung. Unabhängig davon, ob eine Radachse oder Pendelachse 8 vorgesehen wird, können am Chassis der Ballenpresse P mehrere Befestigungseinrichtungen vorhanden sein, um die jeweilige Achse abhängig davon umsetzen zu können, z.B. ebenfalls mit Schnellverschlüssen, ob der Huckepack-Wickler W angebaut ist oder nicht.

Hinter dem Ballen-Auswurfbereich der Ballenpresse P ist an dieser ein Zusatzrahmen Z (an beiden Seiten des Rahmens C) angeordnet, in dessen Bereich Anschlußelemente 15 (Fig. 2) mit Schnellverschlußteilen 17 vorgesehen sind. Am Chassis C der Ballenpresse B sind Anschlußteile 16 mit Elementen 18 von Schnellverschlüssen 1, 2 angebracht.

Der Huckepack-Wickler W ist so ausgebildet, daß er trotz der Abnehmbarkeit in fester Zuordnung zur Ballenauswurfseite der Ballenpresse P auf die Ballenpresse P aufgesattelt werden kann. In dem Huckepack-Wickler ist ein antreibbaren Wickeltisch 9 für einen Rundballen B enthalten und wenigstens eine Tragvorrichtung 10 für eine Folienrolle D, welche Tragvorrichtung 10 an einen Kopfteil 13 einer Rahmenstruktur 12 angebracht ist. An der Rahmenstruktur 12 sind untere Anschlußteile 11 angeordnet. Die Anschlußteile 11 und die Rahmenstruktur 12 enthalten weitere Komponenten 19, 20 der Schnellverschlüsse 1, 2, die zu den Teilen 17, 18 an der Ballenpresse P passen.

Der Huckepack-Wickler W kann auf absenkbaren Standfüßen 14 abgestellt werden, wenn er von der Ballenpresse P gelöst ist. Ferner können Aufnahmen 43 für einen Gabelstapler oder ein Hebezeug vorgesehen sein, um den Huckepack-Wickler bequem manipulieren zu können. Alternativ oder additiv können Anschlüsse 44 für die Dreipunkt-Hebevorrichtung eines Schleppers vorgesehen sein.

In der Betriebsphase der Fig. 4 wird von dem Huckepack-Wickler W gerade ein in Folienmaterial eingewickelter Rundballen B ausgeworfen. Die Rundballenpresse P kann in der Zwischenzeit bereits wieder einen Rundballen fertiggestellt und eingebunden haben, der an den Huckepack-Wickler W zu übergeben ist.

Die in Fig. 4 angedeutete Preßkammer der Ballenpresse P wird von Preßelementen M im Gehäuse 3 und von Preßelementen M' in der um die obenliegende Horizontalachse X schwenkbaren Heckklappe T begrenzt. Die Heckklappe T ist aus der gezeigten Schließstellung um ca. 90° im Uhrzeigersinn um die Achse X schwenkbar, um den Rundballen austreten zu lassen.

Der Rundballen B wird von einer Übergabeeinrichtung U der Funktionseinheit F in den Huckepack-Wickler W gebracht. Im Bereich der Pendelachse 8 des Fahrwerks A ist ein querdurchgehender Rahmenträger 37 vorgesehen, der die Übergabe-Einrichtung U in zwei Teile U1, U2 unterteilt. Der Teil U1 gehört zur Ballenpresse; der Teil U2 hingegen zum Huckepack-Wickler W. Im Teil U2 ist ein Ballenförderelement in Form eines Querrahmens 38 um eine Horizontalachse 40 (z.B. mittels Hydraulikzylinder, nicht gezeigt) aus der gezeigten Ausgangsposition entgegen dem Uhrzeigersinn über etwa 90° hochschwenkbar. Ein außenliegender Querholm 39 des rahmenartigen Förderelementes 38 trägt ein eigenbewegliches Element L, z.B. eine Rolle oder Walze, die frei drehbar ist. Das Förderelement 38 ist so ausgebildet und angeordnet, daß es sich auch bei geschlossener Heckklappe T um die Achse 40 verschwenken läßt.

Der ballenpressenseitige Teil U1 weist ein ähnliches Ballenförderelement 42 auf, z.B. einen querliegenden Rahmen, der einen Querholm 43 besitzt und sich um eine Horizontalachse 41 im Rahmen C aus der gezeigten Ausgangsposition über ca. 90° verschwenken läßt, z.B. mittels Hydraulikzylindern (nicht gezeigt). Die Ausbildung und Anordnung des Förderelementes 42 sind so getroffen, daß das Förderelement nur bei geöffneter Heckklappe T verschwenkbar ist.

Wenn in Fig. 4 der Rundballen in der Preßkammer fertig ist, wird die Heckklappe T geöffnet. Der Rundballen wird vom Förderelement 42 des Teils U1 entgegen der Fahrtrichtung G nach hinten verlagert und in den Einwirkbereich des Förderelementes 38 gebracht. Das Förderelement 38 übernimmt den Rundballen bei noch geöffneter Heckklappe T und fördert ihn weiter zum Wickeltisch 9, der (Fig. 5) zu diesem Zweck etwas schräggestellt wird. Während das Förderelement 38 den Rundballen noch auf den Wickeltisch 9 befördert, ist das Förderelement 42 bereits wieder in seine Ausgangsstellung zurückverstellt worden und wird die Heckklappe T nach unten geschwenkt. Die bis dahin angehaltene Funktionseinheit F kann sogleich wieder losfahren, Erntegut aufnehmen und beginnen, in der Preßkammer einen neuen Rundballen zu wickeln. Sobald der übergebene Rundballen auf dem Wickeltisch 9 ordnungsgemäß positioniert ist, wird der Wickeltisch 9 annähernd horizontal gestellt, und beginnt das Förderelement 38 bei bereits geschlossener Heckklappe T seinen Rückhub zur Ausgangsposition, wobei sich der Querholm 39 mit dem Element L an der Außenkontur der geschlossenen Heckklappe T vorbeibewegt. Ist das Wickeln des Rundballens in dem Huckepack-Wickler W abgeschlossen, wird der Rundballen durch Kippen des Wickeltisches 9 auf dem Feld abgesetzt.

In der Draufsicht der Funktionseinheit F in Fig. 3 ist zu erkennen, daß an beiden Seiten des Zusatzrahmens Z, Folienrollen-Staukästen K angebracht sind. Jeder Kasten K weist ein hohles Gehäuse 21 auf und ist um eine in etwa vertikale Achse 26 aus einer beigeklappten (nicht gezeigten) Fahrtstellung am Zusatzrahmen Z und der gezeigten Wartungsstellung (Fig. 3, oben) bzw. Entnahmestellung (Fig. 3, unten) ausklappbar. In der in Fig. 3 oben gezeigten Wartungsstellung ist seitlich ungehinderter Zugang gegeben, weil ein Schließdeckel 22, der um eine annähernd vertikale Achse 27 schwenkbar am Gehäuse 21 angelenkt ist, am Gehäuse 21 verbleibt. In der in Fig. 3 unten gezeigten Entnahmestellung ist der Schließdeckel 22 um seine Achse 27 aufgeschwenkt, so daß Folienrollen D entnommen werden können.

Zum Sichern des Staukasten K am Zusatzrahmen Z und zum Zuhalten des Schließdeckels 22 kann eine gemeinsame Schließvorrichtung R vorgesehen sein, die z.B. mit Halterungen 22, 24, 25 zusammenarbeitet. Beispielsweise ist ein Schließelement oder ein absperrbares Schloß vorgesehen, das der Benutzer öffnet, um alle Funktionen an dem Staukasten ausführen zu können.

In der Funktionseinheit F erfolgt die Heckklappensteuerung der Ballenpresse P über den Huckepack-Wickler W, der mit seiner Steuervorrichtung E die Heckklappe T schließt oder zumindest ein Freigabesignal abgibt, sobald die Ballenübergabe soweit vollzogen ist, daß keine Kollision mit dem Ballen und/oder der Übergabeeinrichtung mehr auftreten kann. Für die Heckklappe T ist eine Hydraulikbetätigung Z mit wenigstens einem Hydraulikzylinder Z vorgesehen, der über Zulauf- und Rücklaufkupplungen 33", 34" mit Hydraulikmedium beaufschlagbar ist. Das Hydraulikmedium im Hydrauliksystem H kommt z.B. vom nicht gezeigten Schlepper (ggfs. ist an der Ballenpresse P ein eigenes Hydrauliksystem mit Pumpe und Tank vorgesehen). An der Ballenpresse P sind bis zu einer Halterung 28 Hydraulikleitungsstränge 29, 30 festverlegt. Hinter der Halterung 28 sind flexible Strangabschnitte 31, 32 (z.B. Hydraulikschläuche) vorgesehen, die Kupplungen 33, 34 tragen. Am Huckepack-Wickler W sind passende Kupplungen 33', 34' des Hydrauliksystems H' vorgesehen. Von der Steuervorrichtung E im Wickler W führen Leitungen 35, 36 mit Kupplungen 33"', 34"' zu den Zulauf- und Rücklauf-Kupplungen 33", 34" für den Hydraulikzylinder Z. Die Strangendabschnitte 31, 32 sind frei und mit einer Länge vorgesehen, die es gestattet, nach Abnahme des Huckepack-Wicklers W die Kupplungen 33, 34 direkt an die Zulauf- und Ablaufkupplungen 33", 34" des Hydraulikzylinders Z anzuschließen und dann die Heckklappe T manuell oder vom Schlepper aus zu steuern. Die nicht gezeigten Hydraulikzylinder für die beiden Teile U1, U2 der Übergabeeinrichtung U sind ebenfalls an das Hydrauliksystem H bzw. H' angeschlossen. Anstelle der Strangendabschnitte 31, 32 könnten auch lose mitgeführte Schlauchstücke installiert werden. Möglich ist es ferner, die Stränge zum Wickler und zur Hydrauliksteuerung Z fest zu installieren, und umstellbare Ventile einzugliedern, die die Druckübertragung zum Wickler oder zur Hydrauliksteuerung Z wählen lassen, oder vollständig absperren.

Die Anschlußelemente 15, 16 können einen Bausatz bilden, mit dem sich bereits im Betrieb befindliche oder herkömmliche Rundballenpressen nachträglich umrüsten lassen, um mit dem Huckepack-Wickler W kooperieren zu können.

Da sich der ordnungsgemäß angebrachte Huckepack-Wickler in fester Zuordnung zur Ballenpresse P in der Funktionseinheit F befindet und von einem einzigen Fahrwerk A getragen wird, ist die Funktionseinheit gut manövrierbar und ist stets eine gleichbleibende Übergabequalität für die Rundballen gegeben. Die Funktionseinheit kann mit relativ hoher Transportgeschwindigkeit gefahren werden. Die geteilte Übergabeeinrichtung ermöglicht eine bessere Nutzung der Kapazität der Ballenpresse, weil die Heckklappe bereits geschlossen werden kann, während der wicklerseitige Teil U2 den fertigen Rundballen noch in den Wickler transportiert. Das Konzept der Funktionseinheit ist baulich einfach, weil dank der Ausbildung des Huckepack-Wicklers kein überflüssiges Gewicht und keine überflüssigen Komponenten erforderlich sind. Die Ballenpresse P kann jedoch, falls der Huckepack-Wickler W nicht benötigt wird, wie eine herkömmliche Ballenpresse betrieben und gesteuert werden.

## Patentansprüche

1. Landwirtschaftliche Funktionseinheit (F), mit einer Ballenpresse (P), die mit ihrem Rahmen (C) auf einem Fahrwerk (A) angeordnet ist, und mit einem Wickler (W), der in starrer Zuordnung zur Ballenpresse an deren Ballenauswurfseite vom selben Fahrwerk getragen wird, **dadurch gekennzeichnet**, daß der Wickler ein von der Ballenpresse (P) wahlweise abnehmbarer Huckepack-Wickler (W) ist.

2. Funktionseinheit nach Anspruch 1, **dadurch gekennzeichnet**, daß der Huckepack-Wickler mit Schnellverschlüssen (1, 2) an der Ballenpresse (P) angebracht ist.

3. Funktionseinheit nach Anspruch 1, **dadurch gekennzeichnet,** daß die Ballenpresse (P) einen Zusatzrahmen (Z) für den Huckepack-Wickler aufweist, und daß der Huckepack-Wickler über den Zusatzrahmen (Z) an der Ballenpresse (P) angebracht ist.

4. Funktionseinheit nach Anspruch 1, **dadurch gekennzeichnet**, daß eine Ballen-Übergabeeinrichtung (U) der Funktionseinheit (F) in einen wicklerseitigen Teil (U2) und einen ballenpressenseitigen Teil (U1) unterteilt ist, und daß der wicklerseitige Teil (U2) mit dem Huckepack-Wickler von der Ballenpresse trennbar ist.

5. Funktionseinheit nach Anspruch 1, **dadurch gekennzeichnet**, daß das Fahrwerk (A) eine Radachse aufweist, die in Fahrtrichtung hinter der Schwenkachse (X) der Heckklappe (T) der Ballenpresse (P) angeordnet ist.

6. Funktionseinheit nach Anspruch 1, **dadurch gekennzeichnet**, daß das Fahrwerk (A) zwei in Fahrtrichtung (G) beabstandete Radachsen an einer Tandemachse (8) aufweist, die in Fahrtrichtung hinter der Schwenkachse (X) der Heckklappe (T), vorzugsweise in etwa unter dem Gesamtschwerpunkt der Funktionseinheit (F), angeordnet ist.

7. Funktionseinheit nach den Ansprüchen 4 bis 6, **dadurch gekennzeichnet**, daß der ballenpressenseitige Teil (U1) der Übergabeeinrichtung (U) in Fahrtrichtung (E) vor der Tandemachse (8) bzw. der Radachse und der wicklerseitige Teil (U2) dahinter angeordnet sind.

8. Funktionseinheit nach Anspruch 1, **dadurch gekennzeichnet**, daß am Chassis der Ballenpresse (P) in Fahrtrichtung beabstandete, wahlweise nutzbare Befestigungsstellen jeweils für eine Radachse oder eine Tandemachse des Fahrwerks vorgesehen sind.

9. Funktionseinheit nach Anspruch 3, **dadurch gekennzeichnet**, daß der um eine in etwa vertikale Achse (26) zwischen einer beigeklappten Fahrtposition und einer nach außen geklappten Entnahme- oder Wartungsposition schwenkbar gelagert ist, und daß der Staukasten (K) an seiner zur Mitte der Funktionseinheit (F) weisenden Seite durch einen Schwenkdeckel (22) verschließbar ist, der um eine zur Achse (26) in etwa parallele Achse (27) zwischen einer Verschlußstellung und einer Entnahmestellung schwenkbar ist.

10. Funktionseinheit nach Anspruch 9, **dadurch gekennzeichnet**, daß der Schwenkdeckel (22) in seiner Schließlage und der Staukasten in seiner Fahrtposition durch einen gemeinsamen Verschluß (R) gesichert sind.

11. Funktionseinheit nach Anspruch 4, **dadurch gekennzeichnet**, daß der wicklerseitige Teil (U2) der Übergabeeinrichtung (U) einen um eine Horizontalachse (14) schwenkbaren Rahmen (38) aufweist, und daß ein endseitiger Querholm (39) des Rahmens wenigstens ein frei bewegliches Element (L) aufweist.

12. Funktionseinheit nach Anspruch 11, **dadurch gekennzeichnet**, daß das Element (L) wenigstens eine am Querholm (39) frei drehbare Rolle oder Walze ist.

13. Funktionseinheit nach wenigstens einem der vorhergehenden Ansprüche, **dadurch gekennzeichnet**, daß die Heckklappe (T) einen Hydraulikantrieb (Z) mit zugeordneten Zulauf- und Rücklaufkupplungen (33", 34") aufweist, daß an der Ballenpresse (P) verlegte Hydraulikstränge (29, 30) vorgesehen sind, die mit ballenpressenseitigen Kupplungen (33, 34) enden, und daß die ballenpressenseitigen Kupplungen (33, 34) an flexiblen Strangendabschnitten (31, 32), vorzugsweise Schlauchabschnitten, angeordnet sind, die eine Länge aufweisen, welche bei abgenommenem Huckepack-Wickler einen Direktanschluß der Kupplungen (33, 34) an die Zulauf- und Rücklauf-kupplungen (33", 34") des Heckklappen-Hydraulikantriebs (Z) zuläßt.

14. Funktionseinheit nach wenigstens einem der Ansprüche 1 bis 13, **dadurch gekennzeichnet**, daß der Huckepack-Wickler (W) einen eigenen Steuervorrichtungs-Teil aufweist, mit dem bei angebautem Huckepack-Wickler die Freigabe des Hydraulikantriebs (Z) der Heckklappe (T) in Abhängigkeit von der zumindest weitgehend ordnungsgemäß durchgeführten Übergabe eines Rundballens (B) an den Wickler steuerbar ist.

15. Funktionseinheit nach Anspruch 1, **dadurch gekennzeichnet**, daß der Huckepack-Wickler (W) absenkbare Standfüße (14) und/oder einen Dreipunkt-Hebeanschluß (44) und/oder Gabelstapler-Hebeaufnahmen (43) und/oder wenigstens einen Hebezeug-Anschluß aufweist.

16. Funktionseinheit nach wenigstens einem der vorhergehenden Ansprüche, **gekennzeichnet durch** einen Anbausatz (15, 16, 17, 18) für eine Standard-Ballenpresse (P) zum Aufsatteln des Huckepack-Wicklers (W).
